# EUROPÄISCHE PATENTSCHRIFT

(11) **EP 2 448 234 B1**
(45) Veröffentlichungstag und Bekanntmachung des Hinweises auf die Patenterteilung: **27.02.2019**
(21) Anmeldenummer: 11006405.2
(22) Anmeldetag: 04.08.2011
(51) Int. Cl.: H04M 11/02

(54) **Wohnungsstation eines Haus-Kommunikationssystems**
Residence station of a building communication system
Poste d'appartement d'un système de communication interne

(30) Priorität: 27.10.2010 DE 102010049823
(43) Veröffentlichungstag der Anmeldung: 02.05.2012
(73) Patentinhaber: ABB AG, 68309 Mannheim (DE)
(72) Erfinder: Bigalke, Olaf, 58638 Iserlohn (DE); Platte, Jörg, 44149 Dortmund (DE); Kruppa, Christian, 44649 Herne (DE); Zapp, Robert, 58579 Schalksmühle (DE); Schramm, Peter, 44269 Dortmund (DE)

(56) Entgegenhaltungen:
- JP-A- 2003 219 354
- JP-A- 2008 252 332
- US-A1- 2003 086 547
- US-A1- 2005 248 443
- US-A1- 2007 123 234

## Beschreibung

Die Erfindung betrifft eine Wohnungsstation eines Haus-Kommunikationssystems mit mindestens einer Türstation und einer oder mehreren Wohnungsstationen.

Aus der JP 2008 252 332 A ist eine Türsprechanlage mit einer Türstation und einer Wohnungsstation bekannt, wobei akustische (Ton-) Daten in der Wohnungsstation aufgenommen werden können. Die Wohnungsstation besitzt einen Schacht zum Einstecken eines Aufnahmemediums, auf welchem die akustischen Daten abgespeichert sind. Eine Steuer-/Verarbeitungseinheit der Wohnungsstation dient zur Übernahme der akustischen Daten vom Aufnahmemedium. Sobald ein Ansteuersignal von der Türstation empfangen wird, erfolgt die Wiedergabe in Form eines Klingeltons.

Aus der DE 20 2007 018 516 U1 ist ein Türzugangssystem mit einer eine Kamera und eine Türklingel aufweisenden Türstation und mindestens einer Wohnungsstation bekannt,
- wobei die Kamera eine vor der Türstation sich befindende Person erfasst und ein entsprechendes Bild an eine Bildvergleichseinrichtung der Wohnungsstation weiterleitet,
- wobei die Wohnungsstation einen Referenzspeicher aufweist, in welchem Referenzbilder unterschiedlicher Personen hinterlegt sind,
- wobei die Wohnungsstation einen Speicher aufweist, in welchem unterschiedliche Rufsequenzen hinterlegt sind,
- wobei den unterschiedlichen Referenzbildern unterschiedliche Rufsequenzen zugeordnet sind,
- wobei die Bildvergleichseinrichtung bei Betätigung der Türklingel eine Koinzidenzauswertung hinsichtlich der Bildsignale der Kamera und der Bildsignale des Referenzspeichers durchführt,
- wobei die Bildvergleichseinrichtung den Speicher in Abhängigkeit des Ergebnisses der Koinzidenzauswertung beaufschlagt und
- wobei eine Ansteuereinheit des Speichers einen Tonerzeuger mit der dem Referenzbild zugeordneten Rufsequenz beaufschlägt.

Hierdurch ist es möglich, Familienmitgliedern und fremden Personen unterschiedliche Rufsequenzen oder unterschiedlichen Familienmitgliedern unterschiedliche Rufsequenzen zuzuordnen.

Der Erfindung liegt die Aufgabe zugrunde, eine Wohnungsstation eines Haus-Kommunikationssystems anzugeben, bei welcher in optimierter Form Rufsequenzen respektive Klingeltöne vorgebbar sind.

Diese Aufgabe wird erfindungsgemäß gelöst durch eine Wohnungsstation eines Haus-Kommunikationssystems mit mindestens einer Türstation und einer oder mehreren Wohnungsstationen,
- wobei das Mikrofon zur Vorgabe mindestens einer Spracheingabe in Textform dient, welche als Rufsequenz respektive" Klingelton" abspeicherbar, die Spracheingabe mittels Klingelton-Ansteuerung der Türstation abrufbar und die Spracheingabe über den Lautsprecher der Wohnungsstation wiedergebbar ist,
- wobei für das Einspeichern einer derartigen Spracheingabe in einem ersten Schritt eine entsprechende Beaufschlagung der Steuer-A/erarbeitungseinheit mittels der Ansteuer-/Aktivierungseinheit erfolgt,
- wobei in einem zweiten Schritt die Spracheingabe mittels des Mikrofons erfolgt,
- wobei in einem dritten Schritt wiederum durch Beaufschlagung der Steuer-/Verarbeitungseinheit mittels der Ansteuer-/Aktivierungseinheit das Abspeichern der Spracheingabe in einem Zusatzspeicher erfolgt, und • wobei unterschiedliche, jeweils unterschiedlichen Personen zugeordnete Spracheingaben abspeicherbar und in Abhängigkeit an der Türstation erkannter Personen abrufbar und wiedergebbar sind.

Die mit der Erfindung erzielbaren Vorteile bestehen insbesondere darin, dass individuelle Klingeltöne geladen werden können, um den Klingelton dem persönlichen Geschmack des Nutzers anpassen zu können.

Zweckmäßige Ausgestaltungen der Erfindung sind in den Unteransprüchen gekennzeichnet.

Die Erfindung wird nachstehend an Hand der in der Zeichnung dargestellten Ausführungsbeispiele erläutert. Es zeigen:
- Fig. 1: ein Prinzip-Schaltbild einer ersten Ausführungsform eines Haus-Kommunikationssystems,
- Fig. 2: ein Prinzip-Schaltbild einer zweiten Ausführungsform,
- Fig. 3: ein Prinzip-Schaltbild einer dritten Ausführungsform.

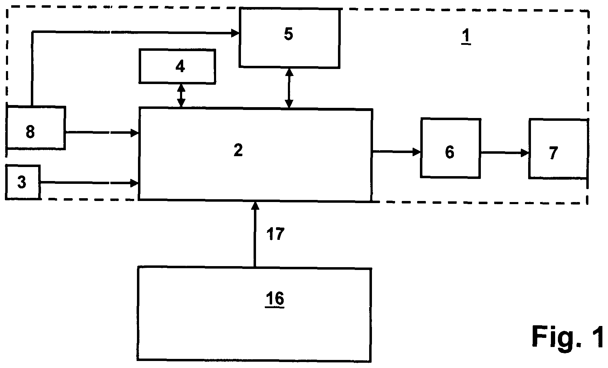

In Fig. 1 ist ein Prinzip-Schaltbild einer ersten Ausführungsform eines Hauskommunikationssystems dargestellt. Es sind eine Wohnungsstation 1 und eine Türstation 16 eines Haus-Kommunikationssystems zu erkennen, wobei die Türstation je nach konkretem Anwendungsfall mit beliebig vielen weiteren Wohnungsstationen verbunden sein kann. Die Wohnungsstation 1 weist eine Steuer-/Verarbeitungseinheit 2 auf, welche über eine Ansteuer-/Aktivierungseinheit 3 mit Eingaben beaufschlagbar ist. Die Steuer-/Verarbeitungseinheit 2 ist mit einem Hauptspeicher 4 verbunden, in welchem beispielsweise werksseitig fest vorgegebene Standard-Klingeltöne abgespeichert sind. Die Steuer-/Verarbeitungseinheit 2 steuert ausgangsseitig einen Verstärker 6 an, welcher mit einem Lautsprecher 7 verbunden ist.

An die Steuer-/Verarbeitungseinheit 2 ist ein Mikrofon 8 angeschlossen, welches zusammen mit dem Lautsprecher 7 während des Normalbetriebes für die Kommunikation zwischen Türstation 16 und Wohnungsstation 1 herangezogen wird. Darüber hinaus dient das Mikrofon 8 zur Vorgabe von Spracheingaben in Textform, welche als Rufsequenzen respektive "Klingeltöne" verwendet werden. Für das Einspeichern einer derartigen Spracheingabe erfolgt
- in einem ersten Schritt eine entsprechende Beaufschlagung (Eingabe) der Steuer-/Verarbeitungseinheit 2 mittels der Ansteuer-/Aktivierungseinheit 3,
- in einem zweiten Schritt die Spracheingabe mittels des Mikrofons 8,
- in einem dritten Schritt das Abspeichern der Spracheingabe in einem Zusatzspeicher 5, wiederum durch Beaufschlagung der Steuer-/Verarbeitungseinheit 2 mittels der Ansteuer-/Aktivierungseinheit 3.

Im Normalbetrieb erfolgt bei Betätigung des Klingelknopfes der Türstation 16 eine Klingelton-Ansteuerung 17 der Steuer-/Verarbeitungseinheit 2, wodurch die im Zusatzspeicher 5 abgespeicherte Spracheingabe ausgelesen und über den Verstärker 6 vom Lautsprecher 7 als "Klingelton" wiedergegeben wird.

In Erweiterung der vorstehenden Ausführungsform weist die Türstation 16 eine Kamera, eine Bildverarbeitungsvorrichtung zur Bearbeitung der von der Kamera aufgenommenen Bilder, einen Bildspeicher zur festen Einspeicherung von Referenzbildern unterschiedlicher Personen und eine Bildvergleichseinrichtung auf, so dass analog zur eingangs erwähnten DE 20 2007 018 516 U1 in Abhängigkeit der erkannten Person und des Vergleichs zwischen der erkannten Person und den Referenzbildern (Koinzidenzauswertung) unterschiedliche, zuvor im Zusatzspeicher 5 abgelegte, unterschiedliche Spracheingaben (jeweils den einzelnen Referenzbildern zugeordnet) ausgelesen und über den Verstärker 6 vom Lautsprecher 7 wiedergegeben werden.

Bei einem Haus-Kommunikationssystem mit nur einer Wohnungsstation 1 können Bildspeicher und Bildvergleichseinrichtung selbstverständlich auch in der Wohnungsstation 1 selbst angeordnet sein.

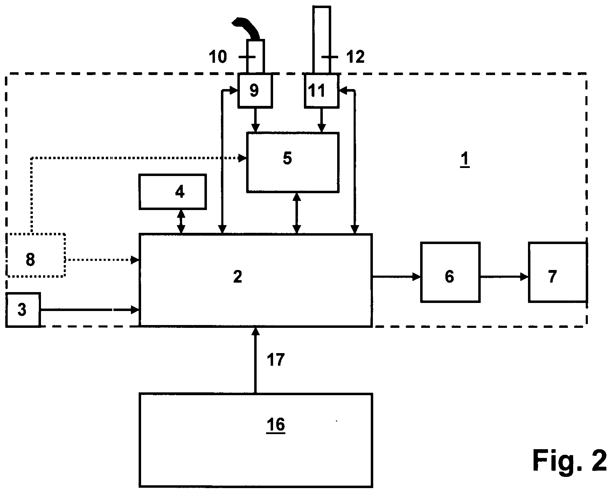

In Fig. 2 ist ein Prinzip-Schaltbild einer zweiten Ausführungsform eines Haus-Kommunikationssystems dargestellt. Zusätzlich zur Ausführungsform gemäß Fig. 1 ist die Wohnungsstation 1 mit einer USB-Steckdose 9 und/oder mit einem Kartenleser 11 ausgerüstet, so dass nach Einführung eines USB-Steckers 10 und/oder nach Einführung einer Speicherkarte 12 individuelle Klingeltöne in den Zusatzspeicher 5 geladen werden können, welche selbstverständlich auch in Form von Sprachausgaben ausgestaltet sein können. Das Einlesen der Klingeltöne über die USB-Steckdose 9 und/oder aus der Speicherkarte erfolgt in über die Steuer-/Verarbeitungseinheit 2 gesteuerter koordinierter Weise, gegebenenfalls unter Mitwirkung der Ansteuer-/Aktivierungseinheit 3.

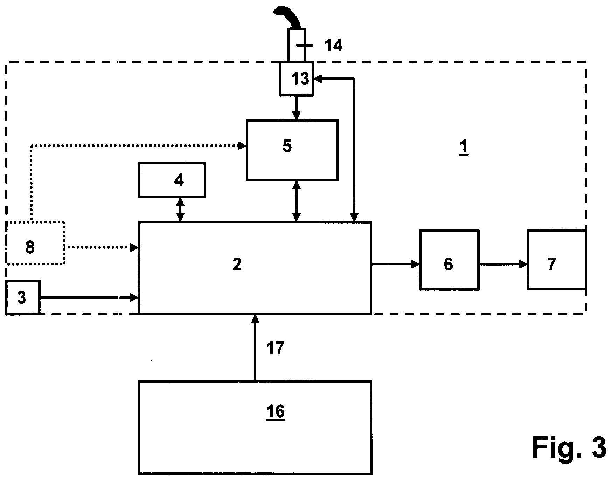

In Fig. 3 ist ein Prinzip-Schaltbild einer dritten Ausführungsform eines Haus-Kommunikationssystems dargestellt. Zusätzlich zur Ausführungsform gemäß Fig. 1 ist die Wohnungsstation 1 mit einem IP-Anschluss 13, z. B. in Form einer IP-Anschlussbuchse oder eines IP-WLAN-Empfängers ausgerüstet, so dass nach Einführung eines IP-Anschlusssteckers 14 individuelle Klingeltöne in den Zusatzspeicher 5 geladen werden können, welche selbstverständlich auch in Form von Sprachausgaben ausgestaltet sein können. Das Einlesen der Klingeltöne über den IP-Anschluss 13 erfolgt in über die Steuer-/Verarbeitungseinheit 2 gesteuerter koordinierter Weise, gegebenenfalls unter Mitwirkung der Ansteuer-/Aktivierungseinheit 3.

Die zusätzlichen Maßnahmen gemäß den Figuren 2 und 3 können auch gemeinsam realisiert werden.

Selbstverständlich kann die Wohnungsstation 1 darüber hinaus auch mit weiteren Komponenten eines Haus-Kommunikationssystems versehen sein, wie beispielsweise mit einem Display, welches Signale einer in der Türstation 16 angeordneten Kamera erhält und entsprechende Bilder zur Anzeige bringt.

Allgemein gilt, dass die Klingeltöne auch in Form von Musikstücken oder Ausschnitten von Musikstücken gestaltet sein können.

### Bezugszeichenliste

- 1: Wohnungsstation
- 2: Steuer-/Verarbeitungseinheit
- 3: Ansteuer-/Aktivierungseinheit
- 4: Hauptspeicher
- 5: Zusatzspeicher
- 6: Verstärker
- 7: Lautsprecher
- 8: Mikrofon
- 9: USB-Steckdose
- 10: USB-Stecker inklusive Kabel
- 11: Karten leser
- 12: Speicherkarte
- 13: IP-Anschluss (Anschlussbuchse oder IP-WLAN-Empfänger)
- 14: IP-Anschlussstecker inklusive Kabel
- 15: -
- 16: Türstation
- 17: Klingelton-Ansteuerung

## Patentansprüche

1. Wohnungsstation eines Haus-Kommunikationssystems, das mindestens eine Türstation (16) und eine oder mehreren Wohnungsstationen (1) aufweist,
• wobei die Wohnungsstation (1) eine Steuer-/Verarbeitungseinheit (2) aufweist, welche über eine Ansteuer-/Aktivierungseinheit (3) mit Eingaben beaufschlagbar ist,
• wobei die Steuer-/Verarbeitungseinheit (2) ausgangsseitig einen Verstärker (6) ansteuert, welcher mit einem Lautsprecher (7) verbunden ist,
• wobei an die Steuer-/Verarbeitungseinheit (2) ein Mikrofon (8) angeschlossen ist, welches zusammen mit dem Lautsprecher (7) während des Normalbetriebes, bei dem für die Kommunikation zwischen Türstation (16) und Wohnungsstation (1) heranziehbar ist, wobei im Normalbetrieb bei Betätigung eines Klingelknopfes der Türstation (16) eine Klingelton-Ansteuerung (17) der Steuer-/Verarbeitungseinheit (2) erfolgt,
**dadurch gekennzeichnet,**
• **dass** das Mikrofon (8) zur Vorgabe mindestens einer Spracheingabe in Textform dient, welche als Rufsequenz respektive "Klingelton" abspeicherbar, die Spracheingabe mittels Klingelton-Ansteuerung (17) der Türstation (16) abrufbar und die Spracheingabe über den Lautsprecher (7) der Wohnungsstation (1) wiedergebbar ist,
• **dass** für das Einspeichern einer derartigen Spracheingabe in einem ersten Schritt eine entsprechende Beaufschlagung der Steuer-/Verarbeitungseinheit (2) mittels der Ansteuer-/Aktivierungseinheit (3) erfolgt,
• **dass** in einem zweiten Schritt die Spracheingabe mittels des Mikrofons (8) erfolgt,
• **dass** in einem dritten Schritt wiederum durch Beaufschlagung der Steuer-/Verarbeitungseinheit (2) mittels der Ansteuer-/Aktivierungseinheit (3) das Abspeichern der Spracheingabe in einem Zusatzspeicher (5) erfolgt, und
• **dass** unterschiedliche, jeweils unterschiedlichen Personen zugeordnete Spracheingaben abspeicherbar und in Abhängigkeit an der Türstation (16) erkannter Personen abrufbar und wiedergebbar sind.

2. Wohnungsstation nach Anspruch 1, **dadurch gekennzeichnet, dass** die Türstation (16) eine Kamera, eine Bildverarbeitungsvorrichtung zur Bearbeitung der von der Kamera aufgenommenen Bilder, einen Bildspeicher zur festen Einspeicherung von Referenzbildern unterschiedlicher Personen und eine Bildvergleichseinrichtung aufweist, so dass in Abhängigkeit der erkannten Person und des Vergleichs zwischen der erkannten Person und den Referenzbildern unterschiedliche, zuvor im Zusatzspeicher (5) abgelegte, unterschiedliche Spracheingaben, die jeweils den einzelnen Referenzbildern zugeordnet sind, ausgelesen und über den Verstärker (6) vom Lautsprecher (7) wiedergegeben werden.

## Claims

1. Residence station of a building communication system having at least one door station (16) and one or more residence stations (1),
• wherein the residence station (1) has a control/processing unit (2) to which inputs can be applied via a control/activation unit (3),
• wherein the control/processing unit (2) controls, on the output side, an amplifier (6) which is connected to a loudspeaker (7),
• wherein a microphone (8) is connected to the control/processing unit (2) and, together with the loudspeaker (7), can be used for communication between the door station (16) and the residence station (1) during normal operation, wherein, during normal operation, ring tone control (17) of the control/processing unit (2) is carried out if a call button of the door station (16) is actuated,
**characterized**
• **in that** the microphone (8) is used to specify at least one voice input in the form of text which can be stored as a call sequence or "ring tone", the voice input can be retrieved by means of ring tone control (17) of the door station (16), and the voice input can be played back via the loudspeaker (7) of the residence station (1),
• **in that** the control/processing unit (2) is accordingly acted upon in a first step by means of the control/activation unit (3) in order to store such a voice input,
• **in that** the voice input is effected by means of the microphone (8) in a second step,
• **in that** the voice input is stored in an additional memory (5) in a third step by again acting upon the control/processing unit (2) by means of the control/activation unit (3), and
• **in that** different voice inputs assigned to respectively different persons can be stored and can be retrieved and played back on the basis of persons identified at the door station (16).

2. Residence station according to Claim 1, **characterized in that** the door station (16) has a camera, an image processing apparatus for processing the images recorded by the camera, an image memory for permanently storing reference images of different persons and an image comparison device, with the result that different voice inputs which have been previously stored in the additional memory (5) and are each assigned to the individual reference images are read out on the basis of the identified person and the comparison between the identified person and the reference images and are played back by the loudspeaker (7) via the amplifier (6).

## Revendications

1. Station de logement d'un système de communication domestique, lequel possède au moins une station de porte (16) et une ou plusieurs stations de logement (1),
* la station de logement (1) possédant une unité de commande/traitement (2) qui peut être sollicitée par des saisies par le biais d'une unité d'excitation/activation (3),
* l'unité de commande/traitement (2) commandant par sa sortie un amplificateur (6) qui est relié à un haut-parleur (7),
* un microphone (8) étant raccordé à l'unité de commande/traitement (2), lequel peut être utilisé conjointement avec le haut-parleur (7) pendant le fonctionnement normal pour la communication entre la station de porte (16) et la station de logement (1), une excitation de la sonnerie (17) de l'unité de commande/traitement (2) ayant lieu en fonctionnement normal lors de l'actionnement d'un bouton de sonnette de la station de porte (16),
caractérisée en ce
* que le microphone (8) sert à prédéfinir au moins une saisie vocale sous forme de texte, laquelle peut être mémorisée en tant que séquence d'appel ou « sonnerie », la saisie vocale peut être invoquée au moyen de l'excitation de la sonnerie (17) de la station de porte (16) et la saisie vocale peut être reproduite par le biais du haut-parleur (7) de la station de logement (1),
* que pour la mémorisation d'une telle saisie vocale, une sollicitation correspondante de l'unité de commande/traitement (2) au moyen de l'unité d'excitation/activation (3) est effectuée dans une première étape,
* que la saisie vocale au moyen du microphone (8) est effectuée dans une deuxième étape,
* que dans une troisième étape est effectuée la mémorisation de la saisie vocale dans une mémoire supplémentaire (5), une nouvelle fois par sollicitation de l'unité de commande/traitement (2) au moyen de l'unité d'excitation/activation (3), et
* que des saisies vocales différentes, respectivement associées à des personnes différentes, peuvent être mémorisées et peuvent être invoquées et reproduites en fonction des personnes reconnues au niveau de la station de porte (16).

2. Station de logement selon la revendication 1, **caractérisée en ce que** la station de porte (16) possède une caméra, un arrangement de traitement d'images destiné au traitement des images enregistrées par la caméra, une mémoire d'image destinée à mémoriser à demeure des images de référence de différentes personnes et un dispositif de comparaison d'images, de sorte que des saisies vocales différentes préalablement stockées dans la mémoire supplémentaire (5), lesquelles sont respectivement associées aux images de référence individuelles, sont lues et reproduites par le haut-parleur (7) par le biais de l'amplificateur (6) en fonction de la personne reconnue et de la comparaison entre la personne reconnue et les images de référence.
